# EUROPEAN PATENT SPECIFICATION

(11) **EP 1 302 109 B1**
(45) Date of publication and mention of the grant of the patent: **25.08.2004**
(21) Application number: 02022535.5
(22) Date of filing: 07.10.2002
(51) Int. Cl.: A22C 11/08

(54) **Twin vane concentric pump**
Konzentrische Doppelflügelzellenpumpe
Pompe concentrique à deux palettes

(30) Priority: 10.10.2001 CA 2358587; 27.11.2001 US 994413
(43) Date of publication of application: 16.04.2003
(73) Proprietor: HANDTMANN PIEREDER MACHINERY LTD., Waterloo, Ontario N2V 1A2 (CA)
(72) Inventor: Staudenrausch, Georg, 88400 Biberach (Risseck) (DE)
(74) Representative: Gervasi, Gemma, Dr.

(56) References cited:
- GB-A- 702 107
- US-A- 4 060 349
- US-A- 4 484 374
- US-A- 5 720 603
- PATENT ABSTRACTS OF JAPAN vol. 008, no. 216 (M-329), 3 October 1984 (1984-10-03) & JP 59 101592 A (SAKUJI KAJIYAMA), 12 June 1984 (1984-06-12)

## Description

This invention relates to a pump for transferring and portioning pieces of meat, meat emulsions or any viscous material from a feed means such as a hopper to a packaging means.

### BACKGROUND OF THE INVENTION

In the production of whole muscle meat products, such as hams, large meat chunks are transferred from a hopper to a packaging station by way of a meat pump. At the packaging station, the meat is divided into portions and stuffed into casings.

One type of meat pump for transferring large pieces of meat from a hopper to a packaging station is described in U.S. Patent No. 4,060,349 to Piereder and comprises a continuous flow, oscillating meat pump in which a single vane oscillates between a pair of walls defining a V-shaped chamber. The pump described in this patent is advantageous in the production of whole muscle meat products since it can handle large pieces of meat and causes relatively little damage to the meat chunks, in comparison with other types of pumps which use screws or gears to transport the meat.

However, single vane oscillating pumps have the disadvantage that the vane must stop and change direction at the end of its path, resulting in a loss of efficiency which limits the output of the pump.

A further disadvantage of many presently used meat pumps is that they operate at relatively low pressures. Thus, when the meat product is expelled from the pump outlet, it must be further pressurized prior to being portioned and stuffed into a casing in order to ensure that it is uniform and free of voids. The pressurization, portioning and stuffing operations are typically performed by a single apparatus which is positioned at the outlet of the meat pump. Examples of presently used portioning and packaging devices are described in U.S. Patent Nos. 4,188,767 and 4,417,434, both to Piereder.

In order to improve efficiency in the production of whole muscle meat products, it would be advantageous to provide a meat pump which provides greater output than presently used single vane oscillating meat pumps and which is able to pressurize and portion the meat product to thereby perform at least some of the operations which would otherwise be performed by a separate portioning apparatus.

### SUMMARY OF THE INVENTION

The present invention overcomes the disadvantages of the prior art discussed above by providing an improved method and apparatus for continuously pumping meat chunks from a feed means to a packaging station in which the meat product is pressurized as it is being pumped and is accurately divided into portions of predetermined size at an outlet valve, thereby eliminating the need for a separate portioning device.

The apparatus according to the invention comprises a twin vane concentric pump in which two movable vanes are rotatable in the same direction. At least one vane is rotating at all times, and therefore losses in efficiency due to stoppage and change of direction of the vanes are substantially reduced or eliminated.

Pressurization of the meat product is achieved by having one vane remain stationary between the inlet and outlet while rotating the second vane toward the outlet, thereby pressurizing the meat product and expelling it through the outlet.

The apparatus also comprises a control system which monitors the pressure and volume within the meat pump and controls the operation of the outlet valve to ensure that the meat product is pressurized to a predetermined pressure and that the portion size is accurately controlled.

In one aspect, the present invention provides an apparatus for dispensing predetermined amounts of a meat product, comprising: (a) a pump housing having an inlet opening, an outlet opening and a hollow interior, with a pump axis being centrally located in said hollow interior and surrounded by a side wall of said housing; (b) first and second vane means located in said hollow interior and rotatable about said pump axis, each of said vane means having a proximal edge proximate the pump axis and a distal edge proximate the side wall of the pump, said vane means dividing said hollow interior into a pair of chambers which are substantially sealed from one another, said chambers each having a volume which varies with relative rotation of the vane means; (c) drive means for rotating said first and second vane means independently of one another; (d) valve means associated with said outlet opening for opening and closing said outlet opening; (e) pressure sensing means for sensing a pressure in at least one of said chambers; (f) volume determination means for measuring a volume in at least one of said chambers; and (g) control means for controlling rotation of said vane means and operation of said valve means in response to pressure and volume information generated by said pressure sensing means and said volume determination means.

In a preferred aspect of the invention, the volume determination means measures the volume of at least one of the chambers by determining the relative positions of the vane means. Preferably, the pressure sensing means senses the pressure inside the outlet chamber, and the volume determination means determines the volume of the outlet chamber. In a further preferred aspect, the apparatus further comprises a stuffing horn associated with the valve means to receive said predetermined amounts of meat product from the valve means. In yet another preferred aspect of the invention, the predetermined amounts of meat product are severed from one another by closing the valve means. In yet another preferred aspect of the invention, the vane means are connected to drive shafts driven by separate drive means. In yet another preferred aspect of the invention, the drive means comprise servo drives. In yet another preferred aspect of the invention, the drive shafts comprise a first drive shaft for driving the first vane means and a second drive shaft for driving the second vane means, the drive shafts being coaxial with the second drive shaft being hollow and having a cylindrical bore through which the first drive shaft extends.

In another aspect, the present invention provides a method for producing predetermined quantities of a meat product using an apparatus comprising a pump housing having an inlet opening, an outlet opening and a hollow interior, with a pump axis being centrally located in said hollow interior and surrounded by a side wall of said housing; and first and second vane means located in said hollow interior and rotatable about said pump axis, each of said vane means having a proximal edge proximate the pump axis and a distal edge proximate the side wall of the pump, said vane means dividing said hollow interior into a pair of chambers which are substantially sealed from one another, said chambers each having a volume which varies with relative rotation of the vane means; said method comprising: (a) positioning said first vane means between said inlet and outlet openings and positioning said second vane means such that a first chamber of said pair of chambers communicates only with said inlet opening and a second chamber of said pair of chambers communicates only with said outlet opening; (b) with the valve means closed, moving the second vane means while the first vane means remains stationary, the second vane means being moved by rotation about said pump axis in a direction such that the volume of the second chamber is decreased and such that a pressure within said second chamber increases to a predetermined pressure and such that the volume of the first chamber is increased and said meat product enters said inlet opening; (c) with the pressure in the second chamber at the predetermined pressure, calculating the volume of the second chamber and, where the volume is less than said predetermined amount of the meat product, proceeding to step (g) or, where the volume is greater than said predetermined amount of the meat product, proceeding to step (d); (d) opening the valve means to allow the meat product to exit the second chamber, while continuing said rotation of said second vane means to maintain said predetermined pressure; (e) closing said valve means once the predetermined amount of the meat product has been dispensed from the outlet opening; (f) repeating steps (c) to (e) until the volume measured in step (c) is less than the predetermined amount of the meat product; (g) rotating the first and second vane means in the same direction until the second vane means is positioned between said inlet and outlet openings and the first vane means is positioned such that the first chamber is in communication only with the outlet opening and the second chamber is in communication only with the inlet opening.

In a preferred method of the present invention, the predetermined pressure is up to about 35 bar. In yet another preferred aspect of the present invention, in which the apparatus further comprises a stuffing horn, the method further includes passing the predetermined quantities of meat product through the stuffing horn into a casing.

### BRIEF DESCRIPTION OF THE DRAWINGS

Preferred embodiments of the invention will now be described, by way of example only with reference to the accompanying drawings, in which:

Figure 1 is a cross-sectional side elevation view of a preferred twin vane concentric pump according to the present invention, the cross-section being in plane 1-1 shown in Figure 4 which passes through the outlet opening of the pump;

Figure 2 is a cross-sectional side view of the hopper and housing of the pump shown in Figure 1, taken in plane 2-2 shown in Figure 4 which passes through the pump inlet;

Figure 3 illustrates the two vanes of the pump shown in Figure 1 in isolation, and separated from one another;

Figure 4 is a perspective view taken from the top and the outlet side of the housing of the pump shown in Figure 1, with the cover removed and the position of the inlet opening being indicated in dashed lines;

Figures 5 to 9 are top plan views of the pump housing of Figure 1 showing the positions of the vanes during various stages of operation; and

Figure 10 is a flow chart illustrating the steps in the preferred method according to the present invention.

### DETAILED DESCRIPTION OF PREFERRED EMBODIMENTS

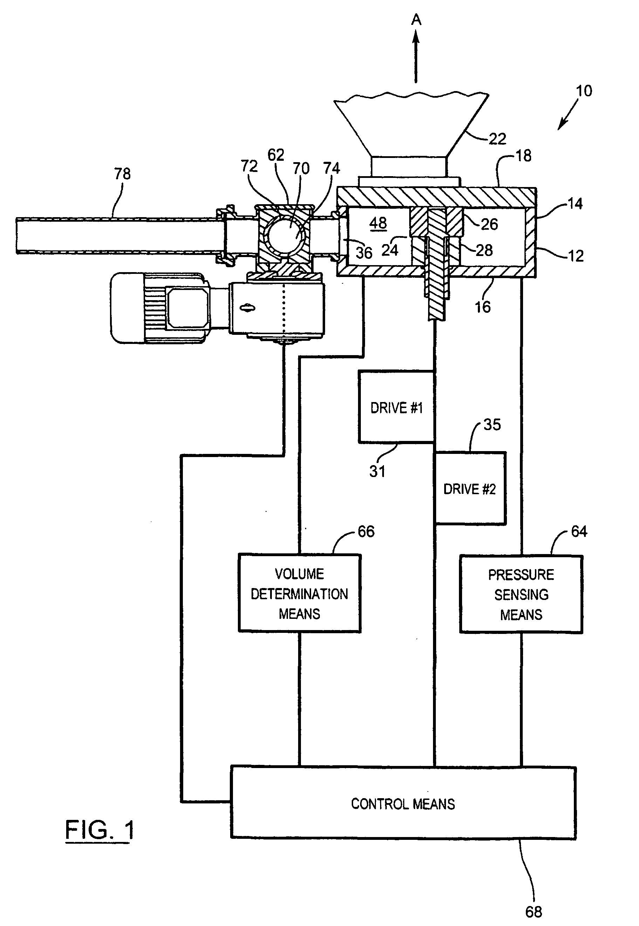

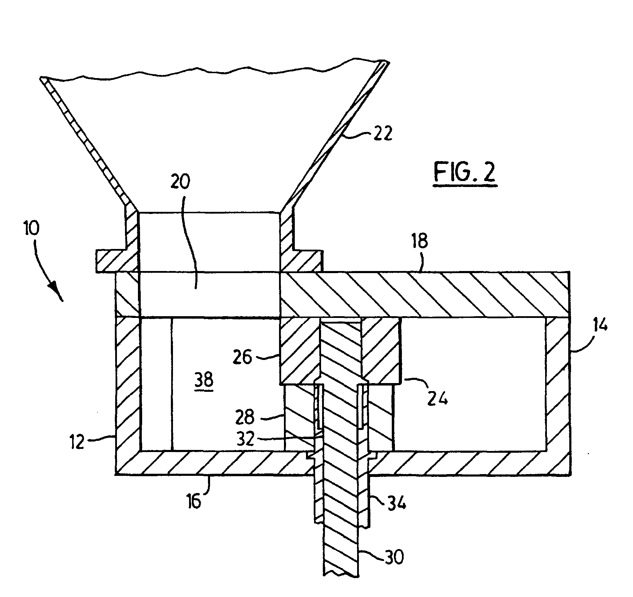

A preferred apparatus for transferring and portioning meat chunks is illustrated in the cross-sectional side views of Figures 1 and 2. The preferred apparatus includes a twin vane concentric meat pump 10 having a cylindrical housing 12 comprised of a cylindrical side wall 14, a circular, flat bottom wall 16 and removable cover 18. The side wall 14, bottom wall 16 and cover 18 of the pump housing 12 together define a hollow interior space having a substantially cylindrical shape.

The removable cover 18 is provided with an inlet opening 20 (Fig. 2) which is in communication with a hopper 22 through which meat chunks are fed into the hollow interior of the pump 10. The inlet opening 20 is provided proximate an edge of the cover 20.

The side wall 12 of housing 14 is provided with an outlet opening 36 (Fig. 1) through which the meat product is expelled from the pump 10. As illustrated in Figure 2, the inlet opening 20 is spaced circumferentially from the outlet opening 36 such that the inlet opening 20 is not located directly above the outlet opening 36, for reasons which will become apparent below.

Located within the hollow interior space of pump housing 12 is a cylindrical hub 24 which extends along a pump axis A. The hub 24 is comprised of two portions, a cylindrical upper portion 26 and a cylindrical lower portion 28. The outside diameters of the upper and lower portions are preferably the same.

The upper portion 26 of hub 24 is mounted on a drive shaft 30 which passes through a hollow passage 32 in the lower portion 28 of hub 24. The lower portion 28 of hub 24 is connected to a hollow drive shaft 34 through which the shaft 30 extends. Drive shafts 30 and 34 are drivable by separate driving means 31 and 35, only schematically illustrated in Figure 1. Preferably, the driving means 31, 35 each comprise a servo drive and are contained in a gearbox.

Attached to the upper portion 26 of hub 24 is a first vane 38 (see Figs. 2, 3 and 4) having a proximal edge 40 extending parallel to the pump axis and a distal edge 42 extending parallel to the pump axis and being proximate the side wall 14 of housing 12 so as to form a substantial seal therewith. The upper portion of the proximal edge 40 is connected to the upper portion 26 of hub 24, while the lower portion of proximal edge 40 is closely spaced relative to the lower portion 28 of hub 24 so as to form a substantial seal therewith. The first vane 38 has a height which is substantially the same as the height of the hollow interior space of the housing 12 such that the upper edge 44 of vane 38 forms a substantial seal with the cover 18 and the lower edge 46 of vane 38 forms a substantial seal with the bottom wall 16 of the housing 12.

Attached to the lower portion 28 of hub 24 is a second vane 48 (see Figs. 1, 3 and 4) having a proximal edge 50, a distal edge 52, an upper edge 54 and a lower edge 56. Second vane 48 has dimensions substantially identical to those of the first vane 38 to thereby form a substantial seal with the bottom wall, cover and side wall of housing 12. The proximal edge 48 of the second vane 48 has a lower portion which is attached to the lower portion 28 of hub 24, and an upper portion which is closely spaced relative to upper portion 26 of hub 24 so as to form a substantial seal therewith.

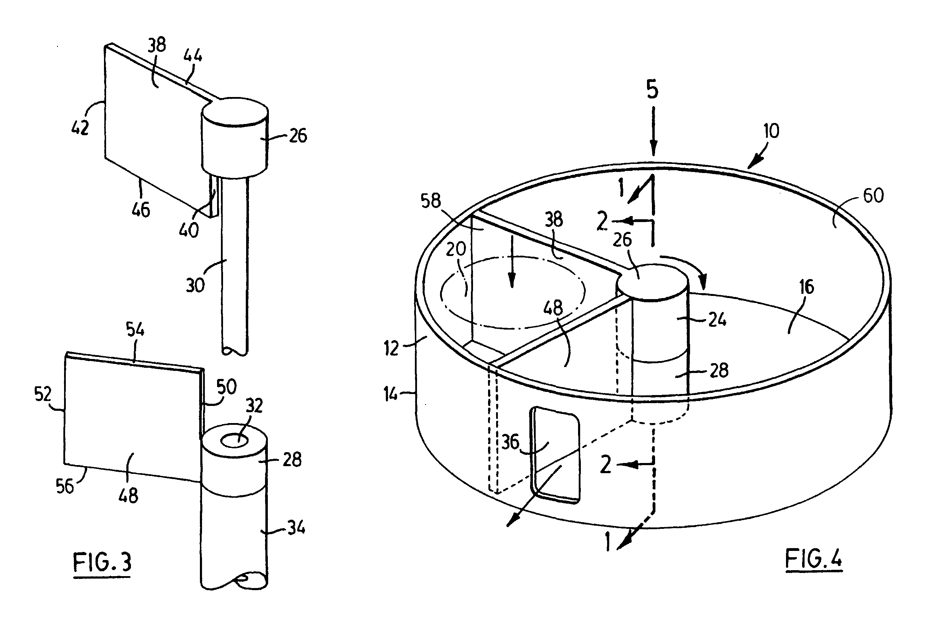

As shown in Figure 4, the vanes 38 and 48 divide the hollow interior of housing 12 into a pair of chambers which are substantially sealed from one another. With the second vane 48 positioned between the circumferentially spaced inlet opening 20 and outlet opening 36 as shown in Figure 4, the pair of chambers comprises an inlet chamber 58 which communicates only with the inlet opening 20 and an outlet chamber 60 which communicates only with the outlet opening 36. As will become apparent from the discussion below, the relative volumes of the inlet and outlet chambers 58 and 60 are variable with relative rotation of the first and second vanes 38 and 48.

Located externally of the housing 12 at the outlet opening 36 is an outlet valve 62 (Fig. 1) which may preferably have a valve body with a spherical or cylindrical valve chamber 70. Inside valve chamber 70 is provided a rotatable valve element 72 having a circular cross-section as shown in Figure 1 and having a cylindrical bore 74 through which the meat product is expelled. The valve 62 is shown in the open position in Figure 1, and can be closed by rotating valve element by 90 degrees. As illustrated, the outlet valve is preferably in direct communication with a tubular stuffing horn 78, such that the portioned meat product (not shown) is directly stuffed into a casing (not shown) as it leaves outlet valve 62.

The apparatus 10 further comprises pressure sensing means 64 (Fig. 1) to sense the pressure within the outlet chamber 60, and volume determination means 66 (Fig. 1) to monitor the volume of the outlet chamber 60. Preferably, these means continuously monitor the pressure and volume inside the outlet chamber during pump operation. The pressure and volume data gathered by the pressure sensing and volume determination means are communicated to a control means 68 (Fig. 1) which controls the opening and closing of outlet valve 62 based on the supplied pressure and volume data.

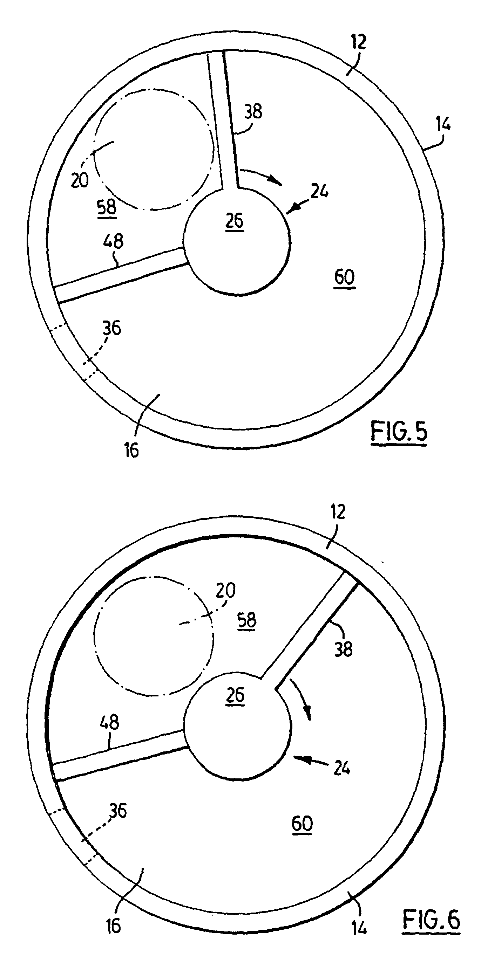

The operation of pump 10 according to the invention will now be described below with reference to Figures 5 to 9, which illustrate the positions of vanes 38 and 48 during a first cycle of pump operation. In the example described below, the maximum volume of the outlet chamber is greater than two times, and less than three times, the volume of the portioned meat product which is produced by apparatus 10. However, it will be appreciated that the preferred apparatus 10 is capable of producing portioned meat products of a variety of predetermined sizes. Preferably, housing 12 is sufficiently large that the maximum volume of the outlet chamber 60 will be greater than the volume of the portioned meat product which is to be produced.

Figure 5 illustrates the relative positions of the vanes 38 and 48 at the beginning of a first pumping cycle during operation of the pump 10, and is essentially the same configuration described above in connection with Figure 4. That is, the second vane 48 is positioned between the inlet opening 20 and outlet opening 36 and the first vane 38 is positioned just ahead of the inlet opening 20. Thus, inlet chamber 58 and outlet chamber 60 are formed, and are substantially sealed from one another by the vanes 38 and 48. At the beginning of the cycle, the outlet valve 62 is closed, thereby preventing the pump from expelling the meat product through outlet opening 36 until it has been sufficiently pressurized.

During the first portion of this pump cycle, first vane 38 is rotated in the clockwise direction (toward the outlet opening 36) about the pump axis A, while the second vane 48 remains stationary between the inlet and outlet openings 20 and 36. Thus, during rotation of the first vane 38, the volume of inlet chamber 58 increases while the volume of outlet chamber 60 decreases. Therefore, a vacuum is created in the inlet chamber, allowing meat chunks to enter the inlet chamber 58 from the hopper 22. Simultaneously, the contents of the outlet chamber 60 are pressurized.

As the first vane 38 is rotated toward the outlet opening 36, with the outlet valve 62 closed, the pressure and volume inside the outlet chamber 60 are monitored by pressure sensing means 64 and volume determination means 66. Rotation of first vane 38 continues until the meat product in the outlet chamber 60 has been pressurized to a predetermined pressure, which is preferably up to about 35 bar. Figure 6 illustrates the relative positions of the vanes 38 and 48 at the instant that the pressure in the outlet chamber 60 reaches the predetermined pressure. If the volume of the outlet chamber 60 at this point is greater than the predetermined amount of the meat product to be expelled from the pump, the valve 62 is opened to allow the meat product to be expelled. Preferably, the meat product is directly stuffed into a casing as it is expelled from the outlet valve 62.

With the outlet valve 62 open, rotation of the first vane 38 is continued in order to maintain the pressure in the outlet chamber 60 substantially equal to the predetermined pressure.

As the meat product is expelled from the outlet chamber 60, the volume inside the outlet chamber 60 is monitored by volume determination means 66. Once the volume inside the outlet chamber 60 is reduced by an amount equal to the predetermined amount, the outlet valve 62 is again closed, thereby separating the dispensed portion of meat from that remaining inside the apparatus 10. As mentioned above, the casing is preferably stapled shut and is cut to sever the encased portion of meat from the apparatus 10.

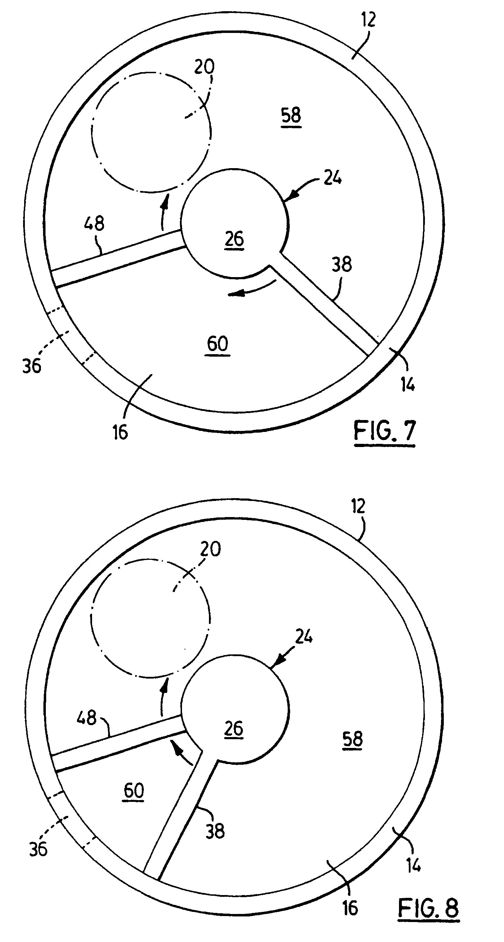

Figure 7 illustrates the relative positions of the vanes 38 and 48 at the instant that the valve 62 is closed to sever the first portion of meat product from that remaining inside the apparatus 10. With the pressure inside outlet chamber 60 maintained at the predetermined pressure, the volume of the outlet chamber is again determined by the volume determination means. In this example, the remaining volume of the outlet chamber 60 as shown in Figure 7 greater than the predetermined volume of the portioned meat product, and therefore the valve 62 is again opened to expel a second portion of meat product.

As the meat is expelled through the valve 62, the first vane 38 is further advanced to maintain the predetermined pressure in the outlet chamber 60. After the predetermined amount of the meat product is expelled from the pump, the outlet valve 62 is again closed, at which point the vanes 38 and 48 have the relative positions shown in Figure 8.

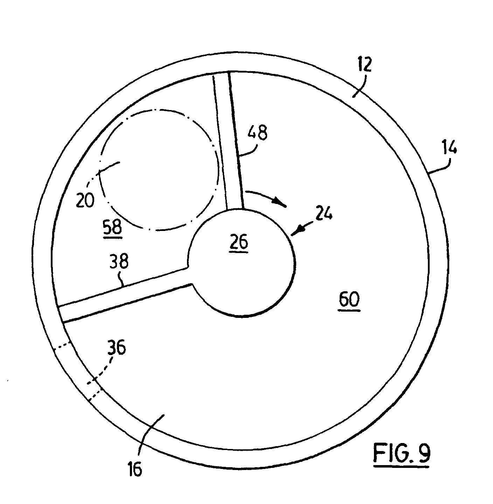

Again, with the pressure within outlet chamber 60 maintained at the predetermined pressure, the volume of the outlet chamber 60 is determined. In the configuration of Figure 8, the remaining volume of outlet chamber 60 is less than the predetermined amount of the meat product, and therefore the amount of meat product remaining in outlet chamber 60 is insufficient to produce another portioned meat product. Accordingly, at this point, both the first vane 38 and the second vane 48 are advanced in the clockwise direction until they adopt the configuration shown in Figure 9, in which the first vane is now positioned between the inlet opening 20 and the outlet opening 36, and in which the second vane is positioned ahead of the inlet opening 20. The vanes are thus positioned for a second cycle of operation in which the second vane 48 is rotated clockwise while the first vane 38 is held stationary. The second cycle of operation is otherwise identical to the first cycle of operation.

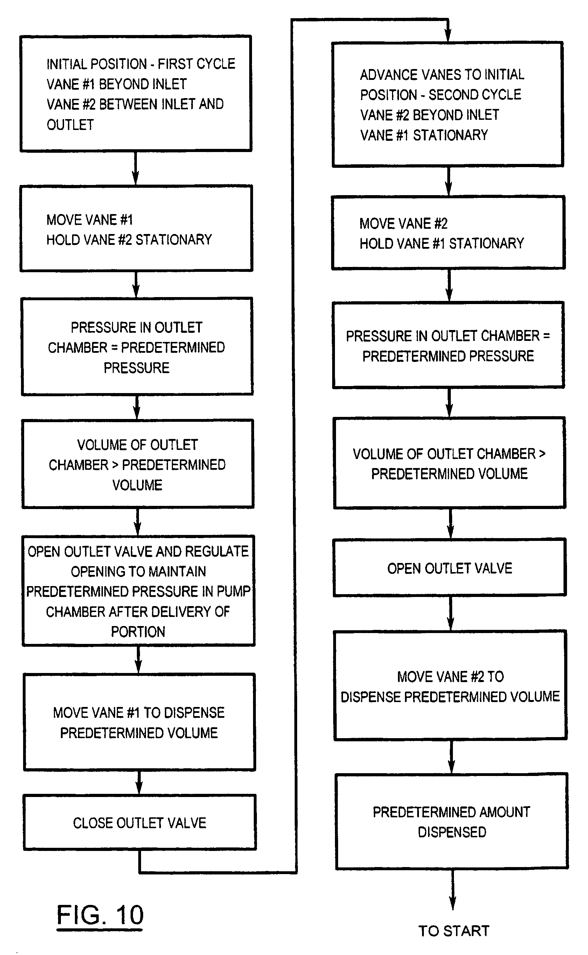

The steps to be followed during two complete cycles of pump operation are shown in the flow chart of Figure 10.

In the above-described example, the operation of the pump 10 was described after initial pump start-up, in which the outlet chamber 60 is full of meat chunks at the start of each cycle. It will be appreciated that, upon initial start-up of the pump 10, the outlet chamber 60 will be empty, and therefore the outlet valve 62 is not opened during the first cycle of operation.

During pump operation, the first and second cycles are repeated in the manner described above to continuously expel predetermined volumes of the meat product from the pump 10. The pressurization of the outlet chamber 60 with the valve closed permits effective pressurization of the meat product therein, thereby eliminating the need for further pressurization of the meat product after it is expelled from the pump.

Furthermore, rotation of both vanes 38 and 48 in the same direction, in combination with simultaneous rotation of the vanes 38 and 48 by independent driving means at the end of each cycle, improves pump efficiency by avoiding loss of momentum due to stopping and changing the direction of rotation at the end of each cycle.

In addition, the use of pressure and volume sensing means, and the use of a control means to control operation of the outlet valve, permits the production of accurately controlled portions of the meat product which eliminates the need for a separate portioning apparatus.

Although the invention has been described in connection with certain preferred embodiments, it is not intended to be limited thereto. Rather, the invention includes all embodiments which may fall within the scope of the following claims.

## Claims

1. An apparatus for dispensing predetermined amounts of a meat product, comprising:
(a) a pump housing (12) having an inlet opening (20), an outlet opening (36) and a hollow interior, with a pump axis (A) being centrally located in said hollow interior and surrounded by a side wall of said housing (12);
(b) first and second vane means (38, 48) located in said hollow interior and rotatable about said pump axis (A) each of said vane means having a proximal edge proximate the pump axis and a distal edge proximate the side wall of the pump, said vane means dividing said hollow interior into a pair of chambers (58, 60) which are substantially sealed from one another, said chambers each having a volume which varies with relative rotation of the vane means;
(c) drive means (31, 35) for rotating said first and second vane means independently of one another;
(d) valve means (62) associated with said outlet opening (36) for opening and closing said outlet opening;
(e) pressure sensing means (64) for sensing a pressure in at least one of said chambers;
(f) volume determination means (66) for measuring a volume in at least one of said chambers; and
(g) control means (68) for controlling rotation of said vane means and operation of said valve means in response to pressure and volume information generated by said pressure sensing means (64) and said volume determination means (66).

2. The apparatus of claim 1, **characterised in that** the volume determination means (66) measures the volume of at least one of the chambers, preferably the outlet chamber (60), by determining the relative positions of the vane means.

3. The apparatus of claim 1 or 2, **characterised in that** the pressure sensing means (64) senses the pressure inside the outlet chamber (60).

4. The apparatus of any one of claims 1 to 3, further comprising a stuffing horn (78) associated with the valve means to receive said predetermined amounts of meat product from the valve means.

5. The apparatus of any one of claims 1 to 4, **characterised in that** the predetermined amounts of meat product are severed from one another by closing the valve means (62).

6. The apparatus of any one of claims 1 to 5, **characterised in that** the vane means are connected to drive shafts (30, 34) driven by separate drive means (31, 35), preferably comprising servo drives.

7. The apparatus of claim 6, **characterised in that** said drive shafts (32, 34) comprise a first drive shaft (30) for driving the first vane means (38) and a second drive shaft (34) for driving the second vane means (48), the drive shafts being coaxial with the second drive shaft being hollow and having a cylindrical bore through which the first drive shaft extends.

8. A method for producing predetermined quantities of a meat product using an apparatus comprising a pump housing (12) having an inlet opening (20), an outlet opening (36) and a hollow interior, with a pump axis (A) being centrally located in said hollow interior and surrounded by a side wall of said housing; and first (38) and second (48) vane means located in said hollow interior and rotatable about said pump axis (A), each of said vane means having a proximal edge proximate the pump axis and a distal edge proximate the side wall of the pump, said vane means dividing said hollow interior into a pair of chambers (58, 60) which are substantially sealed from one another, said chambers each having a volume which varies with relative rotation of the vane means; said method comprising:
(a) positioning said second vane means (48) between said inlet (20) and outlet (36) openings and positioning said first vane means (38) such that a first chamber (58) of said pair of chambers communicates only with said inlet opening (20) and a second chamber (60) of said pair of chambers communicates only with said outlet opening (36);
(b) with the valve means (62) closed, moving the first vane means (38) while the second vane (48) means remains stationary, the first vane means (38) being moved by rotation about said pump axis (A) in a direction such that the volume of the second chamber (60) is decreased and such that a pressure within said second chamber (60) increases to a predetermined pressure and such that the volume of the first chamber (58) is increased and said meat product enters said inlet opening (20);
(c) with the pressure in the second chamber (60) at the predetermined pressure, calculating the volume of the second chamber (60) and, where the volume is less than said predetermined amount of the meat product, proceeding to step (g) or, where the volume is greater than said predetermined amount of the meat product, proceeding to step (d);
(d) opening the valve means (67) to allow the meat product to exit the second chamber (60), while continuing said rotation of said first vane means (38) to maintain said predetermined pressure;
(e) closing said valve means (62) once the predetermined amount of the meat product has been dispensed from the outlet opening (36);
(f) repeating steps (c) to (e) until the volume measured in step (c) is less than the predetermined amount of the meat product;
(g) rotating the first (38) and second (48) vane means in the same direction until the first vane means (38) is positioned between said inlet (20) and outlet (36) openings and the second vane means (48) is positioned such that the first chamber (58) is in communication only with the inlet opening (20) and the second chamber (60) is in communication only with the outlet opening (36).

9. The method of claim 8, **characterised in that** the predetermined pressure is up to about 35 bar.

10. The method of claim 9, **characterised in that** the apparatus further comprises a stuffing horn (78) associated with the valve means (62) to receive said predetermined amounts of meat product from the valve means, and **characterised in that** said method further includes passing the predetermined quantities of meat product through the stuffing horn into a casing.

## Patentansprüche

1. Vorrichtung zur Abgabe vorgegebener Mengen eines Fleischprodukts, umfassend:
(a) ein Pumpengehäuse (12) mit einer Eintrittsöffnung (20), einer Austrittsöffnung (36) und einem hohlen Innenraum, wobei sich in dem genannten hohlen Innenraum in zentraler Position eine Pumpenachse (A) befindet, die von einer Seitenwand des genannten Gehäuses (12) umgeben ist;
(b) ein erstes und ein zweites Flügelelement (38, 48), die sich in dem genannten hohlen Innenraum befinden und um die genannte Pumpenachse (A) drehbar sind und jeweils eine proximale den Pumpenachse zugewandte Kante und eine distale der Seitenwand der Pumpe zugewandte Kante aufweisen, wobei die genannten Flügelelemente den genannten hohlen Innenraum in ein Paar von Kammern (58, 60) unterteilen, die im Wesentlichen voneinander getrennt sind, wobei jede der genannten Kammern ein Volumen aufweist, das mit der relativen Drehung der Flügelelemente variiert;
(c) ein Antriebsmittel (31, 35), um das erste und zweite Flügelelement unabhängig voneinander zu drehen;
(d) ein Ventilmittel (62), das mit der genannten Austrittsöffnung (36) verbunden ist, zum Öffnen und Schließen der genannten Austrittsöffnung;
(e) ein Mittel zur Druckmessung (64), um in wenigstens einer der genannten Kammern einen Druck zu messen;
(f) ein Mittel zur Volumenbestimmung (66), um in wenigstens einer der genannten Kammern ein Volumen zu messen; und
(g) ein Steuerungsmittel (68) zur Steuerung der Drehung der genannten Flügelelemente und des Betriebs des genannten Ventilmittels in Reaktion auf die von dem genannten Mittel zur Druckmessung (64) und dem genannten Mittel zur Volumenbestimmung (66) erzeugten Druck- und Volumeninformationen.

2. Vorrichtung gemäß Anspruch 1, **dadurch gekennzeichnet, dass** das Mittel zur Volumenbestimmung (66) durch Bestimmung der relativen Positionen der Flügelelemente das Volumen wenigstens einer der Kammern misst, und zwar vorzugsweise der Austrittskammer (60).

3. Vorrichtung gemäß Anspruch 1 oder 2, **dadurch gekennzeichnet, dass** das Mittel zur Druckmessung (64) den Druck in der Austrittskammer (60) misst.

4. Vorrichtung gemäß einem der Ansprüche 1 bis 3, weiter umfassend ein Füllrohr (78), das mit dem Ventilmittel verbunden ist, um die genannten vorgegebenen Mengen des Fleischprodukts aus dem Ventilmittel aufzunehmen.

5. Vorrichtung gemäß einem der Ansprüche 1 bis 4, **dadurch gekennzeichnet, dass** die vorgegebenen Mengen des Fleischprodukts durch Schließen des Ventilmittels (62) voneinander getrennt werden.

6. Vorrichtung gemäß einem der Ansprüche 1 bis 5, **dadurch gekennzeichnet, dass** die Flügelelemente mit Antriebswellen (30, 34) verbunden sind, die von getrennten Antriebsmitteln (31, 35) angetrieben werden, die vorzugsweise Servoantriebe umfassen.

7. Vorrichtung gemäß Anspruch 6, **dadurch gekennzeichnet, dass** die genannten Antriebswellen (30, 34) eine erste Antriebswelle (30) für den Antrieb des ersten Flügelelements (38) und eine zweite Antriebswelle (34) für den Antrieb des zweiten Flügelelements (48) umfassen, wobei die Antriebswellen koaxial sind, derart dass die zweite Antriebswelle hohl ist und eine zylindrische Bohrung aufweist, durch die sich dis erste Antriebswelle erstreckt.

8. Verfahren zur Herstellung vorgegebener Mengen eines Fleischprodukts unter Verwendung einer Vorrichtung, die Folgendes umfasst: ein Pumpengehäuse (12) mit einer Eintrittsöffnung (20), einer Austrittsöffnung (36) und einem hohlen Innenraum, wobei sich in dem genannten hohlen Innenraum in zentraler Position eine Pumpenachse (A) befindet, die von einer Seitenwand des genannten Gehäuses umgeben ist; und ein erstes (38) und ein zweites (48) Flügelelement, die sich in dem genannten hohlen Innenraum befinden und um die genannte Pumpenachse (A) drehbar sind und jeweils eine proximale den Pumpenachse zugewandte Kante und eine distale der Seitenwand der Pumpe zugewandte Kante aufweisen, wobei die genannten Flügelelemente den genannten hohlen Innenraum in ein Paar von Kammern (58, 60) unterteilen, die im Wesentlichen voneinander getrennt sind, wobei jede der genannten Kammern ein Volumen aufweist, das mit der relativen Drehung der Flügelelemente variiert; wobei das genannte Verfahren umfasst:
(a) Positionierung des genannten zweiten Flügelelements (48) zwischen der genannten Eintrittsöffnung (20) und der genannten Austrittsöffnung (36) und Positionierung des genannten ersten Flügelelements (38), derart dass eine erste Kammer (58) des genannten Paars von Kammern nur mit der genannten Eintrittsöffnung (20) in Verbindung steht und eine zweite Kammer (60) des genannten Paars von Kammern nur mit der genannten Austrittsöffnung (36) in Verbindung steht;
(b) Bewegung des ersten Flügelelements (38) bei geschlossenem Ventilmittel (62), während das zweite Flügelmittel (48) in Ruhe bleibt, wobei das erste Flügelelement (38) durch Drehung um die genannte Pumpenachse (A) in eine solche Richtung bewegt wird, dass das Volumen der zweiten Kammer (60) verringert wird und dass der Druck in der genannten zweiten Kammer (60) auf einen vorgegebenen Wert ansteigt und dass das Volumen der ersten Kammer (58) wächst und das genannte Fleischprodukt in die genannte Eintrittsöffnung (20) eintritt;
(c) Berechnung des Volumens der zweiten Kammer (60), wobei der Druck in der zweiten Kammer (60) der vorgegebene Druck ist, und Fortfahren mit Schritt (g), wenn das Volumen geringer als die genannte vorgegebene Menge des Fleischprodukts ist, oder Fortfahren mit Schritt (d), wenn das Volumen größer als die genannte vorgegebene Menge des Fleischprodukts ist;
(d) Öffnen des Ventilmittels (62), damit das Fleischprodukt die zweite Kammer (60) verlassen kann, während die genannte Drehung des genannten ersten Flügelelements (38) sich fortsetzt, um den genannten vorgegebenen Druck aufrecht zu erhalten;
(e) Schließen des genannten Ventilmittels (62), sobald die vorgegebene Menge des Fleischprodukts aus der Austrittsöffnung (36) abgegeben worden ist;
(f) Wiederholung der Schritte (c) bis (e), bis das in Schritt (c) gemessene Volumen geringer als die vorgegebene Menge des Fleischprodukts ist;
(g) Drehung des ersten (38) und zweiten (48) Flügelelements in derselben Richtung, bis das erste Flügelelement (38) zwischen der genannten Eintrittsöffnung (20) und der genannten Austrittsöffnung (36) positioniert ist und das zweite Flügelelement (48) so positioniert ist, dass die erste Kammer (58) nur mit der Eintrittsöffnung (20) in Verbindung steht und die zweite Kammer (60) nur mit der Austrittsöffnung (36) in Verbindung steht.

9. Verfahren gemäß Anspruch 8, **dadurch gekennzeichnet, dass** der vorgegebene Druck bis zu ungefähr 35 bar beträgt.

10. Verfahren gemäß Anspruch 9, **dadurch gekennzeichnet, dass** die Vorrichtung weiter ein Füllrohr (78) umfasst, das mit dem Ventilmittel (62) verbunden ist, um die genannten vorgegebenen Mengen des Fleischprodukts aus dem Ventilmittel aufzunehmen, und **dadurch gekennzeichnet, dass** das genannte Verfahren weiter das Weiterleiten der vorgegebenen Mengen des Fleischprodukts durch das Füllrohr in eine Haut umfasst.

## Revendications

1. Appareil pour distribuer des quantités prédéterminées d'un produit à base de viande, comprenant :
(a) un boîtier (12) de pompe ayant une ouverture d'entrée (20), une ouverture de sortie (36) et un intérieur creux, avec un axe de pompe (A) étant situé de manière centrale dans ledit intérieur creux et entouré par une paroi latérale dudit boîtier (12);
(b) des premiers et deuxièmes moyens d'ailettes (38, 48) situés dans ledit intérieur creux et susceptible de tourner autour dudit axe de pompe (A); chacun desdits moyens d'ailettes ayant un bord prochain situé près de l'axe de la pompe et un bord distal situé près de la paroi latérale de la pompe, lesdits moyens d'ailettes séparant ledit intérieur creux en une paire de chambres (58, 60) qui sont essentiellement rendues étanches l'une par rapport à l'autre ; lesdites chambres ayant chacune un volume variant avec la rotation relative des moyens d'ailettes;
(c) des moyens d'entraînement (31, 35) destinés à tourner lesdits premiers et deuxièmes moyens d'ailettes de façon indépendante l'un par rapport à l'autre;
(d) des moyens de valve (62) associés avec ladite ouverture (36) d'entrée pour l'ouverture et la fermeture de ladite ouverture de sortie;
(e) des moyens de capture de pression (64) pour capter une pression dans au moins une desdites chambres;
(f) des moyens de détermination de volume (66) pour mesurer un volume dans au moins une desdites chambres; et
(g) des moyens de régulation (68) pour réguler la rotation desdits moyens d'ailettes et le fonctionnement desdits moyens d'ailettes en réponse à l'information concernant la pression et le volume générés par lesdits moyens de capture de pression (64) et lesdits moyens de détermination de volume (66).

2. Appareil selon la revendication 1, **caractérisé en ce que** les moyens (66) de détermination du volume mesure le volume d'au moins une des chambres, de préférence la chambre (60) de sortie, en déterminant les positions relatives des moyens d'ailettes.

3. Appareil selon la revendication 1 ou 2, **caractérisé en ce que** les moyens de capture de pression (64) capturent la pression à l'intérieur de la chambre de sortie (60).

4. Appareil selon une des revendications 1 à 3, comprenant en outre un canal de remplissage (78) associé aux moyens de soupape afin de recevoir lesdites quantités prédéterminées de produit à base de viande à partir des moyens de valve.

5. Appareil selon une des revendications 1 à 4, **caractérisé en ce que** les quantités prédéterminées du produit à base de viande sont séparées les une des autres en fermant les moyens de soupape (62).

6. Appareil selon une des revendications 1 à 5, **caractérisé en ce que** les moyens d'ailettes sont reliés pour entraîner des tiges (30, 34) entraînées par des moyens d'entraînement séparés (31, 35), comprenant de préférence des servocommandes.

7. Appareil selon la revendication 6, **caractérisé en ce que** lesdites tiges (32, 34) d'entraînement comprennent une première tige (30) d'entraînement pour entraîner les premiers moyens (38) d'ailettes et une deuxième tige (34) d'entraînement pour entraîner les deuxièmes moyens (48) d'ailettes; les tiges d'entraînement étant situées de façon coaxiale par rapport à la deuxième tige d'entraînement creuse et ayant un alésage cylindrique à travers lequel s'étend la première tige d'entraînement.

8. Procédé pour produire des quantités prédéterminées d'un produit à base de viande en utilisant un appareil comprenant un boîtier (12) à pompe ayant une ouverture (20) d'entrée, une ouverture (36) de sortie et un intérieur creux, avec un axe (A) de pompe étant situé de façon centrale dans ledit intérieur creux et étant entouré par une paroi latérale dudit boîtier ; et des premiers (38) et deuxièmes (48) moyens d'ailettes situés dans ledit intérieur creux et susceptibles de tourner autour dudit axe (A) de pompe; chacun desdits moyens d'ailettes ayant un bord proximal situé tout près de l'axe de pompe et un bord distal tout près de la paroi latérale de la pompe, lesdits moyens séparant ledit intérieur creux en une paire de chambres (58, 60) qui sont essentiellement rendues étanches l'une par rapport à l'autre ; lesdites chambres ayant chacune un volume qui varie avec une rotation relative des moyens d'ailettes;
ledit procédé comprenant :
(a) le positionnement desdits deuxièmes moyens (48) d'ailettes entre lesdites ouvertures d'entrée (20) et de sortie (36) et le positionnement desdits premiers moyens (38) d'ailettes de manière à ce qu'une première chambre (58) de ladite paire de chambres, ne communique qu'avec ladite ouverture (20) d'entrée et qu'une deuxième chambre (60) de ladite paires de chambres ne communique qu'avec ladite ouverture (36) de sortie;
(b) avec les moyens de soupapes (62) fermés, le déplacement des premiers moyens d'ailettes (38) alors que les deuxièmes moyens d'ailettes (48) restent immobiles; les premiers moyens d'ailettes (38) étant bougés par rotation autour dudit axe de pompe (A) dans une direction de manière à ce que le volume de la deuxième chambre (60) diminue et qu'une pression à l'intérieur de la deuxième chambre (60) augmente afin d'atteindre une pression déterminée et de manière à ce que le volume de la première chambre (58) augmente et que ledit produit à base de viande entre dans ladite ouverture (20) d'entrée;
(c) avec la pression dans la deuxième chambre (60) à une pression prédéterminée, en calculant le volume de la deuxième chambre (60) et, là où le volume est inférieur à ladite quantité prédéterminée du produit à base de viande, poursuivre par l'étape (g), ou, là où le volume est supérieur à ladite quantité prédéterminée du produit à base de viande, poursuivre par l'étape (d) ;
(d) l'ouverture des moyens d'ailettes (62) pour permettre au produit à base de viande de sortir de la deuxième chambre (60) tout en continuant ladite rotation desdits premiers moyens (38) d'ailettes afin de maintenir ladite pression prédéterminée;
(e) la fermeture desdits moyens d'ailettes (62) dès que la quantité prédéterminée du produit à base de viande a été libérée par l'ouverture (36) de sortie;
(f) la répétition des étapes (c) à (e) jusqu'à ce que le volume mesuré dans l'étape (c) soit inférieur à la quantité prédéterminée du produit à base de viande;
(g) la rotation des premiers (38) et des deuxièmes (48) moyens d'ailettes dans la même direction jusqu'à ce que les premiers moyens d'ailettes (38) se trouvent positionnés entre lesdites ouvertures d'entrée (20) et de sortie (36) et les deuxièmes moyens d'ailettes (48) se trouvent positionnés de manière à ce que la première chambre (58) ne se trouve en communication qu'avec l'ouverture d'entrée (20) et la deuxième chambre (60) en communication qu'avec l'ouverture de sortie (36).

9. Procédé selon la revendication 8, **caractérisé en ce que** la pression prédéterminée peut s'élever jusqu'à environ 35 bars.

10. Procédé selon la revendication 9, **caractérisé en ce que** l'appareil comprend en outre un canal de remplissage (78) associé aux moyens d'ailettes (62) afin de recevoir des quantités prédéterminées de produit à base de viande des moyens de soupape, et **caractérisé en ce que** ledit procédé comprend en outre le passage des quantités prédéterminées de produit à base de viande à travers le canal de remplissage dans un boîtier.
